(19) Europäisches Patentamt / European Patent Office / Office européen des brevets

(11) **EP 4 746 565 A1**

(12) **EUROPEAN PATENT APPLICATION**
published in accordance with Art. 153(4) EPC

(43) Date of publication:
**20.05.2026 Bulletin 2026/21**

(21) Application number: **24853686.4**

(22) Date of filing: **09.08.2024**

(51) International Patent Classification (IPC):
**H04W 74/00** (2009.01)    **H04W 74/08** (2024.01)
**H04L 27/00** (2006.01)

(52) Cooperative Patent Classification (CPC):
**H04L 27/0014; H04L 27/00; H04W 74/00;
H04W 74/08;** H04L 2027/0026

(86) International application number:
**PCT/CN2024/110970**

(87) International publication number:
**WO 2025/036277 (20.02.2025 Gazette 2025/08)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **16.08.2023 CN 202311039104**

(71) Applicant: **Huawei Technologies Co., Ltd.
Shenzhen, Guangdong 518129 (CN)**

(72) Inventors:
• **LI, Yunbo
  Shenzhen, Guangdong 518129 (CN)**
• **GUO, Yuchen
  Shenzhen, Guangdong 518129 (CN)**

(74) Representative: **Pfenning, Meinig & Partner mbB
Patent- und Rechtsanwälte
Theresienhöhe 11a
80339 München (DE)**

(54) **COMMUNICATION METHOD AND COMMUNICATION APPARATUS**

(57)    This application provides a communication method. The method may be applied to a WLAN system that supports 802.11 series protocols such as a next-generation protocol of IEEE 802.11be or Wi-Fi 8, and may also be applied to a UWB-based wireless personal area network system and a sensing system. The method includes: In a channel contention scenario, before sending a defer signal that indicates another station to wait for a duration before channel contention, a station calibrates a CFO based on a last first PPDU received before the defer signal is sent. The CFO is calibrated based on the last received PPDU, so that in a scenario in which a plurality of stations all send defer signals, the plurality of defer signals can be normally received by another station even if a CFO deviation is excessively large.

FIG. 5

EP 4 746 565 A1

# Description

This application claims priority to Chinese Patent Application No. 202311039104.9, filed with the China National Intellectual Property Administration on August 16, 2023 and entitled "COMMUNICATION METHOD AND COMMUNICATION APPARATUS", which is incorporated herein by reference in its entirety.

## TECHNICAL FIELD

This application relates to the field of communication technologies, and more specifically, to a communication method and a communication apparatus.

## BACKGROUND

As wireless local area network (wireless local area network, WLAN) has developed to date, 802.11 is one of current mainstream wireless access standards and has been widely commercially applied in the past decade. A frequently-used basic architecture of the WLAN is that an access point (access point, AP) accesses the Internet in a wired or wireless manner, and the AP is associated with a plurality of stations (stations, STAs). The AP and the associated STAs perform uplink and downlink communication by using the 802.11 protocol. The WLAN operates on an unlicensed spectrum, and the plurality of STAs need to share a same channel. A random backoff mechanism is introduced to resolve a problem of a channel access conflict between the plurality of STAs. However, if a STA continuously performs the backoff mechanism to avoid a channel access conflict, a transmission delay of the STA is excessively long.

In a current delay reduction method, after a STA fails to perform sending for k consecutive times (for example, four times), the STA is allowed to send a defer signal (Defer Signal) after a channel is idle for a specific duration, to trigger another STA to wait, so as to implement transmission on the channel. However, if a plurality of STAs simultaneously send Defer Signals, the Defer Signals sent by the plurality of STAs may fail to be normally received by another STA due to a carrier frequency offset (carrier frequency offset, CFO) deviation between the STAs. As a result, delay reduction fails. Therefore, how to improve performance of a delay reduction manner becomes an urgent problem to be resolved.

## SUMMARY

This application provides a communication method, to implement delay reduction by avoiding a CFO deviation between different stations.

According to a first aspect, a communication method is provided. The method may be performed by a first station, or may be performed by a component (for example, a chip or a circuit) of a first station. This is not limited. For ease of description, the following uses an example in which the first station performs the method for description.

The communication method includes: The first station sends a defer signal after a channel is idle for a first duration, where the defer signal is used to trigger another station to wait for a second duration before channel contention; and the first station calibrates a carrier frequency offset CFO based on a first physical layer protocol data unit (physical layer protocol data unit, PPDU) before sending the defer signal, where the first PPDU is a last PPDU received before the defer signal is sent.

Based on the foregoing technical solution, before sending the defer signal, the first station may calibrate the CFO based on the last received first PPDU. The defer signal is used to trigger the another station to wait for the second duration before channel contention. This increases a probability that the first station successfully performs channel contention, to reduce a delay of the first station. In addition, in the technical solution, before sending the defer signal, the first station calibrates the CFO of the first station based on the last received first PPDU, so that in a scenario in which a plurality of stations in a communication system all send defer signals, the defer signals sent by the plurality of stations can be normally received by another station even if a CFO deviation is excessively large. This ensures normal transmission of the defer signals, to reduce the delay of the first station.

With reference to the first aspect, in some implementations of the first aspect, the first PPDU is a successfully parsed PPDU; and/or a duration between a moment at which the CFO is calibrated and a moment at which the defer signal is sent is less than or equal to a first threshold; and/or a frame carried in the first PPDU is a response frame or a frame that does not trigger a response frame.

Based on the foregoing technical solution, the first PPDU may be a PPDU that meets a specific condition. For example, the first PPDU may be the successfully parsed PPDU by the first station. In this way, in the scenario in which the plurality of stations in the communication system all send the defer signals, it can be avoided that different stations calibrate CFOs based on different PPDUs (for example, some stations may incorrectly parse a receive frame due to interference or a difference between received signal to interference plus noise ratios of different stations, and therefore, different stations calibrate CFOs based on different PPDUs).

The frame carried in the first PPDU is the response frame or the frame that does not trigger the response frame. By stipulating that a frame used by a station to calibrate a CFO is a response frame or a frame that does not trigger a response frame, in the scenario in which the plurality of stations in the communication system all send the defer signals, it can be avoided that different stations calibrate CFOs based on different PPDUs (for example, because of different physical locations, different stations can receive different frames, and therefore, different stations calibrate CFOs based on different PPDUs).

In addition, after a station calibrates a CFO, the CFO gradually increases with time. Therefore, in the scenario in which the plurality of stations in the communication system all send the defer signals, even if the plurality of stations calibrate CFOs based on a same PPDU, a time between calibrating the CFO and sending the defer signal cannot be excessively long. In the technical solution, the duration between the moment at which the CFO is calibrated and the moment at which the defer signal is sent is limited to be less than or equal to the first threshold, to avoid an excessively long time between calibrating the CFO and sending the defer signal.

With reference to the first aspect, in some implementations of the first aspect, before that the first station sends the defer signal, the method further includes: The first station determines, based on physical carrier sensing (physical carrier sensing) and virtual carrier sensing (virtual carrier sensing), that the channel is idle, where a network allocation vector (network allocation vector, NAV) value corresponding to the virtual carrier sensing is set based on a duration Duration field in a medium access control (medium access control, MAC) frame header.

Based on the foregoing technical solution, before sending the defer signal, the first station determines, by invoking a carrier sensing (carrier sensing, CS) mechanism, that a status of the channel is idle. The carrier sensing mechanism includes the physical carrier sensing and the virtual carrier sensing. For the virtual carrier sensing, after receiving a frame whose receiver address is neither a broadcast address nor a MAC address of the first station, an NAV timer is set, and then countdown is performed until the countdown is 0. If the network allocation vector (network allocation vector, NAV) value is not 0, the virtual carrier sensing is busy. If the NAV value is 0, the virtual carrier sensing is idle. In this embodiment, to avoid, in the scenario in which the plurality of stations in the communication system all send the defer signals, an excessively large difference between moments at which different stations determine, by using the carrier sensing mechanism, that the status of the channel is idle, it may be set that all stations that send defer signals set NAVs by using the Duration field.

With reference to the first aspect, in some implementations of the first aspect, a time synchronization function (Time synchronization function, TSF) value at a start moment of sending the defer signal is an integer multiple of 9 microseconds.

Based on the foregoing technical solution, to avoid, in the scenario in which the plurality of stations in the communication system all send the defer signals, an excessively large difference between start moments at which different stations send defer signals, the time synchronization function TSF value at the start moment of sending the defer signal may be set to an integer multiple of 9 microseconds, to align the start moments at which the different stations send the defer signals to a maximum extent.

With reference to the first aspect, in some implementations of the first aspect, the defer signal is generated based on a medium access control MAC frame, and values of a scrambler seed, a legacy signal field (Legacy Signal Field, L-SIG), a duration (Duration) field, and a receiver address (receiver address, RA) field in the MAC frame are determined.

Based on the foregoing technical solution, to enable a station that receives the defer signal to correctly parse the defer signal, the defer signal may be generated based on MAC, and a field in the MAC frame is determined.

With reference to the first aspect, in some implementations of the first aspect, a rate (RATA) field in the L-SIG indicates 6 megabits per second (Mbps); and/or the Duration field indicates 72 microseconds or 36 microseconds; and/or the RA field indicates a broadcast address or a determined MAC address.

With reference to the first aspect, in some implementations of the first aspect, the first station is a station that fails to send a radio frame on the channel for k consecutive times, and k is a positive integer.

According to a second aspect, a communication method is provided. The method may be performed by a first station, or may be performed by a component (for example, a chip or a circuit) of a first station. This is not limited. For ease of description, the following uses an example in which the first station performs the method for description.

The communication method includes: The first station determines, based on physical carrier sensing and virtual carrier sensing, that a status of a channel is idle; and if a network allocation vector NAV value corresponding to the virtual carrier sensing is set based on a duration Duration field in a medium access control MAC frame header, the first station sends a defer signal after determining that the channel is idle for a first duration; or if an NAV value corresponding to the virtual carrier sensing is set based on a transmission opportunity TXOP field in a MAC frame header, the first station determines not to send a defer signal, where the defer signal is used to trigger another station to wait for a second duration before channel contention.

Based on the foregoing technical solution, the first station determines, by invoking a CS mechanism, that a status of the channel is idle. The CS mechanism includes the physical carrier sensing and the virtual carrier sensing. For the virtual carrier sensing, after receiving a frame whose receiver address is neither a broadcast address nor a MAC address of the first station, an NAV timer is set, and then countdown is performed until the countdown is 0. If the NAV value is not 0, the virtual carrier sensing is busy. If the NAV value is 0, the virtual carrier sensing is idle. In this embodiment, if the NAV based on which the first station performs virtual carrier sensing is set based on the duration Duration field in the MAC frame header, the first station may send the defer signal after the channel is idle for a duration. If the NAV based on which the first station performs virtual carrier sensing is set based on the TXOP field in the MAC frame header, the first station determines that the defer signal cannot be sent. This is to avoid, in a scenario in which a plurality of stations in a communication system all send defer signals, an excessively large difference between moments at which different stations determine, by using the carrier sensing mechanism, that the status of the channel is idle.

With reference to the second aspect, in some implementations of the second aspect, when the first station sends the defer signal after determining that the channel is idle for the first duration, the method further includes: The first station sends the defer signal after the channel is idle for the first duration; and the first station calibrates a carrier frequency offset CFO based on a first physical layer protocol data unit PPDU before sending the defer signal, where the first PPDU is a last PPDU received before the defer signal is sent.

Based on the foregoing technical solution, before sending the defer signal, the first station may calibrate the CFO based on the last received first PPDU. The defer signal is used to trigger the another station to wait for the second duration before channel contention. This increases a probability that the first station successfully performs channel contention, to reduce a delay of the first station. In addition, in the technical solution, before sending the defer signal, the first station calibrates the CFO of the first station based on the last received first PPDU, so that in the scenario in which the plurality of stations in the communication system all send the defer signals, the defer signals sent by the plurality of stations can be normally received by another station even if a CFO deviation is excessively large. This ensures normal transmission of the defer signals, to reduce a delay of the first station.

For example, for a condition that the first PPDU meets, refer to the descriptions of the first PPDU in the first aspect. Details are not described herein again. In addition, the defer signal may be generated based on a MAC frame. For a condition that the MAC frame meets, refer to the descriptions of the defer signal in the first aspect. Details are not described herein again.

With reference to the second aspect, in some implementations of the second aspect, a time synchronization function TSF value at a start moment of sending the defer signal is an integer multiple of 9 microseconds.

Based on the foregoing technical solution, to avoid, in the scenario in which the plurality of stations in the communication system all send the defer signals, an excessively large difference between start moments at which different stations send defer signals, the time synchronization function TSF value at the start moment of sending the defer signal may be set to an integer multiple of 9 microseconds, to align the start moments at which the different stations send the defer signals to a maximum extent.

According to a third aspect, a communication method is provided. The method may be performed by a first station, or may be performed by a component (for example, a chip or a circuit) of a first station. This is not limited. For ease of description, the following uses an example in which the first station performs the method for description.

The communication method includes: The first station generates a defer signal based on a medium access control MAC frame, where the defer signal is used to trigger another station to wait for a second duration before channel contention, and values of a scrambler seed, a legacy signal field L-SIG, a duration Duration field, and a receiver address RA field in the MAC frame are determined; and the first station sends the defer signal after a channel is idle for a first duration.

Based on the foregoing technical solution, to enable a station that receives the defer signal to correctly parse the defer signal, the defer signal may be generated based on MAC, and a field in the MAC frame is determined.

With reference to the third aspect, in some implementations of the third aspect, a rate (RATA) field in the L-SIG indicates 6 megabits per second (Mbps); and/or the Duration field indicates 72 microseconds or 36 microseconds; and/or the RA field indicates a broadcast address or a determined MAC address.

With reference to the third aspect, in some implementations of the third aspect, the first station is a station that fails to send a radio frame on the channel for k consecutive times, and k is a positive integer.

With reference to the third aspect, in some implementations of the third aspect, the first station calibrates a carrier frequency offset CFO based on a first physical layer protocol data unit PPDU before sending the defer signal, where the first PPDU is a last PPDU received before the defer signal is sent.

Based on the foregoing technical solution, before sending the defer signal, the first station may calibrate the CFO based on the last received first PPDU. The defer signal is used to trigger the another station to wait for the second duration before channel contention. This increases a probability that the first station successfully performs channel contention, to reduce a delay of the first station. In addition, in the technical solution, before sending the defer signal, the first station calibrates the CFO of the first station based on the last received first PPDU, so that in the scenario in which the plurality of stations in the communication system all send the defer signals, the defer signals sent by the plurality of stations can be normally received by another station even if a CFO deviation is excessively large. This ensures normal transmission of the defer signals, to reduce a delay of the first station.

For example, for a condition that the first PPDU meets, refer to the descriptions of the first PPDU in the first aspect. Details are not described herein again.

With reference to the third aspect, in some implementations of the third aspect, before that the first station sends the defer signal, the method further includes: The first station determines, based on physical carrier sensing and virtual carrier sensing, that the channel is idle, where a network allocation vector NAV value corresponding to the virtual carrier sensing is set based on a duration Duration field in a medium access control MAC frame header.

Based on the foregoing technical solution, before sending the defer signal, the first station determines, by invoking a carrier sensing (carrier sensing, CS) mechanism, that a status of the channel is idle. The carrier sensing mechanism includes the physical carrier sensing and the virtual carrier sensing. For the virtual carrier sensing, after receiving a frame whose receiver address is neither a broadcast address nor a MAC address of the first station, an NAV timer is set, and then countdown is performed until the countdown is 0. If the network allocation vector (network allocation vector, NAV) value is not 0, the virtual carrier sensing is busy. If the NAV value is 0, the virtual carrier sensing is idle. In this embodiment, to avoid, in the scenario in which the plurality of stations in the communication system all send the defer signals, an excessively large difference between moments at which different stations determine, by using the carrier sensing mechanism, that the status of the channel is idle, it may be set that all stations that send defer signals set NAVs by using the Duration field.

With reference to the third aspect, in some implementations of the third aspect, a time synchronization function TSF value at a start moment of sending the defer signal is an integer multiple of 9 microseconds.

Based on the foregoing technical solution, to avoid, in the scenario in which the plurality of stations in the communication system all send the defer signals, an excessively large difference between start moments at which different stations send defer signals, the time synchronization function TSF value at the start moment of sending the defer signal may be set to an integer multiple of 9 microseconds, to align the start moments at which the different stations send the defer signals to a maximum extent.

According to a fourth aspect, a communication apparatus is provided. The apparatus is configured to perform the methods according to the first aspect to the third aspect. Specifically, the apparatus may include units and/or modules configured to perform the method according to any one of the implementations of the first aspect to the third aspect, for example, a processing unit and/or a communication unit.

For example, when the communication apparatus is the first station in the first aspect, the communication unit is configured to send a defer signal after a channel is idle for a first duration, where the defer signal is used to trigger another station to wait for a second duration before channel contention; and the processing unit is further configured to calibrate a carrier frequency offset CFO based on a first physical layer protocol data unit PPDU before the communication unit sends the defer signal, where the first PPDU is a last PPDU received before the defer signal is sent.

For example, when the communication apparatus is the first station in the second aspect, the processing unit is configured to determine, based on physical carrier sensing and virtual carrier sensing, that a status of a channel is idle; and if a network allocation vector NAV value corresponding to the virtual carrier sensing is set based on a duration Duration field in a medium access control MAC frame header, the processing unit is configured to send a defer signal after determining that the channel is idle for a first duration; or if an NAV value corresponding to the virtual carrier sensing is set based on a transmission opportunity TXOP field in a MAC frame header, the processing unit is configured to determine not to send a defer signal, where the defer signal is used to trigger another station to wait for a second duration before channel contention.

For example, when the communication apparatus is the first station in the third aspect, the processing unit is configured to generate a defer signal based on a medium access control MAC frame, where the defer signal is used to trigger another station to wait for a second duration before channel contention, and values of a scrambler seed, a legacy signal field L-SIG, a duration Duration field, and a receiver address RA field in the MAC frame are determined; and the communication unit is configured to send the defer signal after a channel is idle for a first duration.

In an implementation, the apparatus is a terminal device. When the apparatus is the terminal device, the communication unit may be a transceiver or an input/output interface, and the processing unit may be at least one processor. Optionally, the transceiver may be a transceiver circuit. Optionally, the input/output interface may be an input/output circuit.

For example, when the communication apparatus is the first station in the first aspect, the transceiver is configured to send a defer signal after a channel is idle for a first duration, where the defer signal is used to trigger another station to wait for a second duration before channel contention; and the processing unit is further configured to calibrate a carrier frequency offset CFO based on a first physical layer protocol data unit PPDU before the communication unit sends the defer signal, where the first PPDU is a last PPDU received before the defer signal is sent.

For example, when the communication apparatus is the first station in the second aspect, the processor is configured to determine, based on physical carrier sensing and virtual carrier sensing, that a status of a channel is idle; and if a network allocation vector NAV value corresponding to the virtual carrier sensing is set based on a duration Duration field in a medium access control MAC frame header, the processor is configured to send a defer signal after determining that the channel is idle for a first duration; or if an NAV value corresponding to the virtual carrier sensing is set based on a transmission opportunity TXOP field in a MAC frame header, the processor is configured to determine not to send a defer signal, where the defer signal is used to trigger another station to wait for a second duration before channel contention.

For example, when the communication apparatus is the first station in the third aspect, the processor is configured to generate a defer signal based on a medium access control MAC frame, where the defer signal is used to trigger another station to wait for a second duration before channel contention, and values of a scrambler seed, a legacy signal field L-SIG, a duration Duration field, and a receiver address RA field in the MAC frame are determined; and the transceiver is configured to send the defer signal after a channel is idle for a first duration.

In another implementation, the apparatus is a chip, a chip system, or a circuit used in a terminal device. When the apparatus is the chip, the chip system, or the circuit used in the terminal device, the communication unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to a fifth aspect, a communication apparatus is provided. The apparatus includes: a memory, configured to store a program; and at least one processor, configured to execute a computer program or instructions stored in the memory, to perform the method according to any one of the foregoing implementations of the first aspect to the third aspect, or any one of the foregoing implementations of the second aspect and the third aspect.

According to a sixth aspect, this application provides a processor, configured to perform the methods provided in the foregoing aspects.

Unless otherwise specified, or if operations such as sending and obtaining/receiving related to the processor do not conflict with actual functions or internal logic in related descriptions, the operations may be understood as operations such as outputting, receiving, and inputting performed by the processor, or may be understood as sending and receiving operations performed by a radio frequency circuit and an antenna. This is not limited in this application.

According to a seventh aspect, a computer-readable storage medium is provided. The computer-readable storage medium stores program code executed by a device, and the program code includes instructions for performing the method according to any one of the foregoing implementations of the first aspect to the third aspect.

According to an eighth aspect, a computer program product including instructions is provided. When the computer program product is run on a computer, the computer is enabled to perform the method according to any one of the foregoing implementations of the first aspect to the third aspect.

According to a ninth aspect, a chip is provided. The chip includes a processor and a communication interface. The processor reads, through the communication interface, instructions stored in a memory, to perform the method according to any one of the foregoing implementations of the first aspect to the third aspect.

Optionally, in an implementation, the chip further includes the memory. The memory stores a computer program or the instructions. The processor is configured to execute the computer program or the instructions stored in the memory. When the computer program or the instructions are executed, the processor is configured to perform the method according to any one of the foregoing implementations of the first aspect to the third aspect.

According to a tenth aspect, a communication system is provided. The communication system includes the first station in the first aspect, the first station in the second aspect, or the first station in the third aspect.

**BRIEF DESCRIPTION OF DRAWINGS**

FIG. 1 is a diagram of an application scenario to which an embodiment of this application is applicable;

FIG. 2 is a diagram of a structure of an apparatus according to this application;

FIG. 3 is a diagram of a PPDU format;

FIG. 4 is a diagram of sending a Defer Signal according to an embodiment of this application;

FIG. 5 is a schematic flowchart of a communication method according to an embodiment of this application;

FIG. 6 is a schematic flowchart of a communication method according to an embodiment of this application;

FIG. 7 is a block diagram of a communication apparatus according to an embodiment of this application;

FIG. 8 is a diagram of another communication apparatus according to an embodiment of this application; and

FIG. 9 is a diagram of a chip system according to an embodiment of this application.

**DESCRIPTION OF EMBODIMENTS**

For ease of understanding embodiments of this application, the following points are first described.

First, in this application, "indicate" may include "directly indicate" and "indirectly indicate". When a piece of indication information indicates A, the indication information may directly indicate A or indirectly indicate A, but it does not indicate that the indication information definitely carries A.

Information indicated by indication information is referred to as to-be-indicated information. In a specific implementation process, there are a plurality of manners of indicating the to-be-indicated information, for example, but not limited to, the following manners: The to-be-indicated information is directly indicated, for example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent. In addition, a common part of all pieces of information may be identified and indicated in a unified manner, to reduce indication overheads caused by separately indicating same information.

Second, "at least one" shown in this application means one or more, and "a plurality of" means two or more. In addition, in embodiments of this application, "first", "second", and various numeric numbers (for example, "#1" and "#2") are merely used for distinguishing for ease of description, and are not used to limit the scope of embodiments of this application. Sequence numbers in the following processes do not mean execution sequences. The execution sequences of the processes should be determined based on functions and internal logic of the processes, and should not constitute any limitation on implementation processes of embodiments of this application. It should be understood that, objects described in this way may be interchangeable in proper cases, so that solutions other than embodiments of this application can be described. In addition, in embodiments of this application, words such as "S510" are merely identifiers for ease of description, and do not limit a sequence of performing steps.

Third, in embodiments of this application, a word such as "example" or "for example" is used to represent giving an example, an illustration, or a description. Any embodiment or design solution described as an "example" or "for example" in this application should not be explained as being more preferred or more advantageous than another embodiment or design solution. Exactly, use of the word like "example" or "for example" is intended to present a related concept in a specific manner.

Fourth, "stored" in embodiments of this application may mean be storage in one or more memories. The one or more memories may be separately disposed, or may be integrated into an encoder, a decoder, a processor, or a communication apparatus. Alternatively, some of the one or more memories may be separately disposed, and some may be integrated into a decoder, a processor, or a communication apparatus. A type of the memory may be a storage medium in any form. This is not limited in this application.

Fifth, in embodiments of this application, a "protocol" may be a standard protocol in the communication field, for example, may include an NR protocol and a related protocol applied to a future communication system. This is not limited in this application.

Sixth, in embodiments of this application, terms "of (of)", "corresponding (corresponding, relevant)", "corresponding (corresponding)", and "associate (associate)" may be interchangeably used sometimes. It should be noted that meanings expressed by the terms are consistent when differences are not emphasized.

Seventh, in embodiments of this application, "in a case of", "when", and "if" may be interchangeably used sometimes. It should be noted that meanings expressed by the terms are consistent when differences are not emphasized.

Eighth, the term "and/or" in this specification is merely an association relationship for describing associated objects, and indicates that three relationships may exist. For example, A and/or B may indicate the following three cases: Only A exists, both A and B exist, and only B exists. In addition, the character "/" in this specification generally indicates an "or" relationship between the associated objects.

The following describes technical solutions of this application with reference to the accompanying drawings.

The technical solutions provided in embodiments of this application are applicable to a wireless local area network (wireless local area network, WLAN) scenario, for example, support related institute of electrical and electronics engineers (institute of electrical and electronics engineers, IEEE) 802.11 standards, such as the 802.11a/b/g standard, the 802.11n standard, the 802.11ac standard, the 802.11ax standard, and a next-generation Wi-Fi protocol of IEEE 802.11ax, for example, 802.11be, Wi-Fi 7, extremely high throughput (extremely high throughput, EHT), 802.11ad, 802.11ay, or 802.11bf, or for another example, a next generation of 802.11be like Wi-Fi 8; may be further applied to an ultra-wideband (ultra-wideband, UWB)-based wireless personal area network system, for example, 802.15 series standards; and may be further applied to a sensing (sensing) system, for example, 802.11bf series standards. The 802.11n standard is referred to as high throughput (high throughput, HT), the 802.11ac standard is referred to as a very high throughput (very high throughput, VHT) standard, the 802.11ax standard is referred to as a high efficient (high efficient, HE) standard, and the 802.11be standard is referred to as an extremely high throughput (extremely high throughput, EHT) standard. 802.11bf includes two major categories of standards: a low-frequency (for example, sub-7 GHz) standard and a high-frequency (for example, 60 GHz) standard. An implementation of sub-7 GHz mainly depends on 802.11ac, 802.11ax, 802.11be, and a next-generation standard. An implementation of 60 GHz mainly depends on 802.11ad, 802.11ay, and a next-generation standard. 802.11ad may also be referred to as a directional multi-gigabit (directional multi-gigabit, DMG) standard, and 802.11ay may also be referred to as an enhanced directional multi-gigabit (enhanced directional multi-gigabit, EDMG) standard.

Although embodiments of this application are mainly described by using an example in which a WLAN network is deployed, especially a network to which the IEEE 802.11 series standards are applied, a person skilled in the art easily understands that various aspects in embodiments of this application may be extended to other networks that use various standards or protocols, for example, a high performance radio local area network (high performance radio local area network, HIPERLAN), a wireless wide area network (wireless wide area network, WWAN), a wireless personal area network (wireless personal area network, WPAN), or other networks that are known or developed in the future. Therefore, regardless of a used coverage area and a used wireless access protocol, the various aspects provided in embodiments of this application are applicable to any suitable wireless network.

The technical solutions in embodiments of this application may be further applied to various communication systems, for example, a WLAN communication system, a wireless fidelity (wireless fidelity, Wi-Fi) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system or a new radio (new radio, NR) system, a future 6th generation (6th generation, 6G) system, an internet of things (internet of things, IoT) network, or a vehicle-to-everything (vehicle to x, V2X) network.

The foregoing communication systems to which this application is applicable are merely examples for description, and the communication systems to which this application is applicable are not limited thereto. This is uniformly described herein, and details are not described below again.

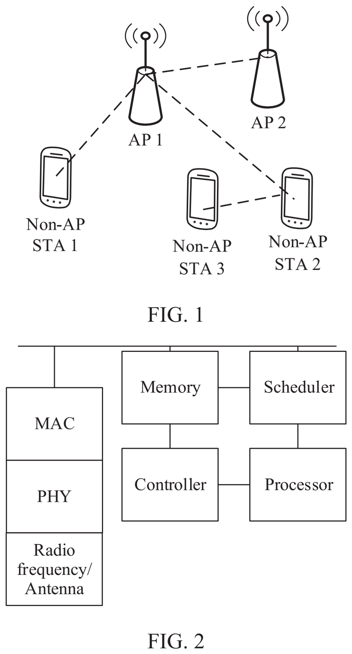

FIG. 1 is a diagram of an application scenario to which an embodiment of this application is applicable. As shown in FIG. 1, a communication method provided in this application is applicable to data communication between an access point (access point, AP) and a station (station, STA). The station may be a non-access point station (non-access point station, non-AP STA), which is referred to as a non-AP station or a STA for short. Specifically, the solutions of this application are applicable to data communication between an AP and one or more non-AP stations (for example, data communication between an AP 1 and both a non-AP STA 1 and a non-AP STA 2), and are also applicable to data communication between APs (for example, data communication between the AP 1 and an AP 2) and data communication between non-AP STAs (for example, data communication between the non-AP STA 2 and a non-AP STA 3).

The access point may be a node through which a terminal (for example, a mobile phone) accesses a wired (or wireless) network, and is mainly deployed at home, in a building, or on a campus, with a typical coverage radius ranging from dozens of meters to 100-odd meters, or certainly, may be deployed outdoors. The access point is equivalent to a bridge that connects the wired network and the wireless network. A main function of the access point is to connect various wireless network clients together and then connect the wireless network to the Ethernet.

Specifically, the access point may be a terminal or a network device with a Wi-Fi chip. The network device may be a server, a router, a switch, a bridge, a computer, a mobile phone, a relay station, a vehicle-mounted device, a wearable device, a network device in a 5G network, a network device in a 6G network, a network device in a public land mobile network (public land mobile network, PLMN), or the like. This is not limited in embodiments of this application. The access point may be a device that supports a Wi-Fi standard. For example, the access point may alternatively support one or more of the following IEEE 802.11 series standards: 802.11a, 802.11b, 802.11g, 802.11n, 802.11ac, 802.11ax, 802.11be, 802.11ad, and 802.11ay.

The non-AP station may be a wireless communication chip, a wireless sensor, a wireless communication terminal, or the like, and may also be referred to as a user, user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus. The non-AP station may be a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a vehicle-mounted device, an internet of things device, a wearable device, a terminal device in a 5G network, a terminal device in a 6G network, a terminal device in a PLMN, or the like. This is not limited in embodiments of this application. The non-AP station may be a device that supports a WLAN standard. For example, the non-AP station may support one or more of the following IEEE 802.11 series standards: 802.11a, 802.11b, 802.11g, 802.11n, 802.11ac, 802.11ax, 802.11be, 802.11ad, and 802.11ay.

For example, the non-AP station may be a mobile phone, a tablet computer, a set-top box, a smart television, a smart wearable device, a vehicle-mounted communication device, a computer, an internet of things (internet of things, IoT) node, a sensor, a smart home, for example, a smart camera, a smart remote control, a smart water meter, a sensor in a smart city, or the like.

The AP or the non-AP station may include a transmitter, a receiver, a memory, a processor, and the like. The transmitter and the receiver are respectively configured to send and receive packet structures. The memory is configured to store signaling information, store a preset value that is pre-agreed-upon, and the like. The processor is configured to parse the signaling information, process related data, and the like.

For example, FIG. 2 shows a communication apparatus according to this application. The apparatus shown in FIG. 2 may be an AP or a non-AP station. A medium access control (medium access control, MAC) layer processing module, a physical (physical, PHY) layer processing module, a radio frequency/antenna, and the like are configured to implement related functions of the foregoing transmitter and receiver. As shown in FIG. 2, in addition to the MAC layer processing module, the PHY layer processing module, the radio frequency/antenna, a memory, and a processor, the apparatus may further include a controller and a scheduler.

It should be understood that FIG. 2 shows merely an example of an apparatus provided in this application, and does not constitute a limitation on this application. For example, the apparatus may alternatively not include the controller and/or the scheduler.

For ease of understanding of the technical solutions in embodiments of this application, some terms or concepts that may be used in embodiments of this application are first briefly described.

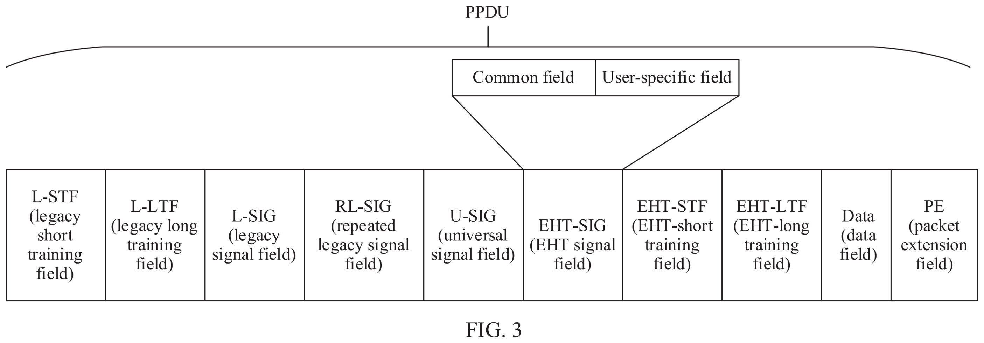

1. Physical layer protocol data unit (physical layer protocol data unit, PPDU): FIG. 3 is a diagram of a PPDU format. The PPDU includes a legacy short training field (Legacy Short Training Field, L-STF), a legacy long training field (Legacy Long Training Field, L-LTF), a legacy signal field (Legacy Signal Field, L-SIG), a repeated legacy signal field (repeated legacy signal field, RL-SIG), a universal signal field (universal SIG, U-SIG), an extremely high throughput signal field (extremely high throughput signal field, EHT-SIG), an EHT-short training field (EHT-short training field, EHT-STF), an EHT-long training field (EHT-long training field, EHT-LTF), a data (Data) field, and a packet extension (packet extension, PE) field. The L-STF, the L-LTF, the L-SIG, the RL-SIG, the U-SIG, the EHT-SIG, the EHT-STF, and the EHT-LTF are a part of structures in a physical layer header (or referred to as a preamble part) of the PPDU.

The L-STF, the L-LTF, and the L-SIG may be understood as legacy preamble fields, and are used to ensure coexistence of a new device and a legacy device. The RL-SIG is used to enhance reliability of the legacy signal field.

The U-SIG and the EHT-SIG are signal fields.

The U-SIG is used to carry some common information, for example, information indicating a PPDU version, information indicating an uplink/downlink, information indicating a frequency domain bandwidth of the PPDU, and puncturing indication information. The EHT-SIG includes information indicating resource allocation, information indicating data demodulation, and the like.

It should be noted that in embodiments of this application, fields in a PPDU in an 802.11be scenario are used as an example for description. The fields in the PPDU mentioned in embodiments of this application are not limited to fields related to 802.11be. The fields in the PPDU mentioned in embodiments of this application may alternatively be fields related to a standard version after 802.11be, including but not limited to a case that a PPDU signal field in a next-generation protocol is ultra-high reliability signaling (ultra-high reliability signaling, UHR-SIG).

2. Distributed coordination function (distributed coordination function, DCF): A WLAN operates on an unlicensed spectrum, and a plurality of stations need to share a same channel. To resolve a problem of a channel access conflict between the plurality of stations, a random backoff mechanism, namely, a DCF mechanism, is introduced. Before sending a data frame or a management frame, a station needs to first invoke a carrier sensing (carrier sensing, CS) mechanism to determine whether the channel is idle or busy. When the channel is busy, the station needs to defer channel access for specific time.

For example, the specific time is classified into two cases: When a frame is detected but is not successfully received, the specific time is an extended interframe space (extended interframe space, EIFS); and in another case (for example, when no frame is detected, or when a frame is detected and is successfully received), the specific time is a distributed interframe space (distributed interframe space, DIFS).

Specifically, a DIFS duration and an EIFS duration are respectively:

$$DIFS = aSIFSTime + 2*aSlotTime;$$

and

$$EIFS = aSIFSTime + AckTxTime + DIFS.$$

Generally, aSIFSTime is 16 microseconds, and aSlotTime is 9 microseconds. Specific values of aSIFSTime and aSlotTime may vary with different spectrums and protocols. Specific values of aSIFSTime and aSlotTime are not limited in this application. AckTxTime is a transmission duration of an acknowledgement (ACK) frame.

After waiting for the DIFS duration or the EIFS duration in which the channel is idle, the station further needs to perform backoff before sending the data frame or the management frame. For ease of description, the following uses an example in which the specific time is DIFS for description.

For example, a process in which a station performs the DCF mechanism is as follows: The station randomly selects a backoff count from a window [0, contention window (contention window, CW)] as a counter value. After the station waits for the DIFS duration in which the channel is idle, the counter value is decreased by 1 each time the channel is idle for one aSlotTime. When the counter value is decreased to 0, the station sends a data frame or a management frame. An initial value of the CW is the minimum contention window (CWmin). Herein, [0, CW] indicates that a value range of the counter value is greater than or equal to 0 and less than or equal to the CW.

If a station successfully sends a data frame or a management frame, the CW is set to CWmin, and the station randomly selects a counter value from [0, CWmin] when performing next channel contention.

If the station fails to send the data frame or the management frame, the CW is set to 2*CW+1, and the station randomly selects a counter value from [0, 2*CW+1] when performing next channel contention.

If the station consecutively fails to send the data frame or the management frame, the CW is set to CWmax, and the CW remains at CWmax. The CW is set to CWmin after the data frame or the management frame is sent successfully.

As described above, in a scenario in which a plurality of stations share a same channel, a channel access conflict may be avoided by using the DCF mechanism.

Optionally, two stations that generate a same random backoff counter value may simultaneously back off to 0, and then the two stations simultaneously send data frames or management frames. In this case, both the two stations fail to send the data frames or the management frames due to a channel access conflict. After failing to send the data frames or the management frames, the two stations randomly select counter values in a larger contention window to access the channel. This reduces a channel access conflict probability. When more stations initiate contention at the same time, a channel access conflict probability is higher, and the contention window is continuously increased. In other words, an actual contention window is dynamically adjusted based on the contention stations, to support channel contention of different quantities of contention stations.

3. Enhanced distributed channel access (enhanced distributed channel access, EDCA): The EDCA is derived from the DCF.

In a DCF mechanism, one station corresponds to one contention queue, and to-be-sent data of the station is cached in a same queue. In an EDCA mechanism, one station supports four access categories (access categories, ACs) to distinguish data of different priorities, and each access category maintains an independent set of channel contention parameters. Priorities of the four different access categories are AC_VO, AC_VI, AC_BE, and AC_BK in descending order.

In a random backoff process corresponding to each AC, an arbitration interframe space (Arbitration Interframe Space, AIFS) duration is waited for, instead of the DIFS duration. AIFS[AC]=AIFSN[AC]*aSlotTime+aSIFSTime. Each AC also corresponds to different CWmin[AC] and CWmax[AC]. Small AIFSN, CWmin, and CWmax parameters may be allocated to an access category with a high priority, and large AIFSN, CWmin, and CWmax parameters may be allocated to an access category with a low priority, to increase a sending opportunity of a high-priority service and reduce a sending opportunity of a low-priority service. The minimum value of the AIFSN is 2.

4. Defer signal (Defer Signal): After a station fails to perform sending for k consecutive times (for example, four times), the station is allowed to send a Defer Signal after a channel is idle for the DIFS duration.

An example of the Defer Signal is using a legacy preamble (legacy preamble), that is, the Defer Signal includes L-STF, L-LTF, and L-SIG fields. Because the Defer Signal does not have a payload (payload) part, after the station receives the Defer Signal, the station considers the Defer Signal as an error frame, to trigger waiting for the EIFS duration. Within the EIFS duration, the station that sends the Defer Signal may initiate backoff again, and the station that ends backoff may send data. Backoff may resolve a collision problem after the plurality of stations send Defer Signals at the same time.

The foregoing briefly describes, with reference to FIG. 1, the scenario to which the communication method provided in embodiments of this application is applicable, and describes basic concepts that may be involved in embodiments of this application. The Defer Signal is described in the basic concepts. It can be learned from the foregoing descriptions about the Defer Signal that a station may reduce a delay of the station by sending the Defer Signal.

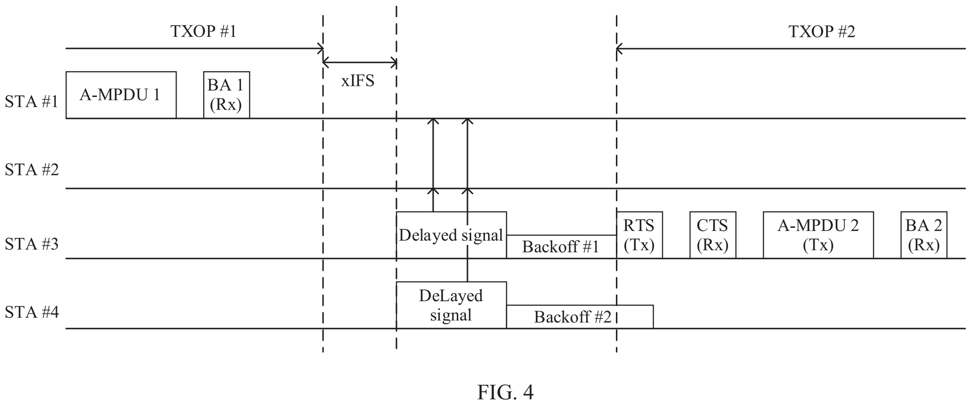

For ease of understanding, how a station sends a Defer Signal is described with reference to FIG. 4.

After a transmission opportunity (Transmission Opportunity, TXOP) on a channel is used, another station determines, based on physical carrier sensing and virtual carrier sensing, end time of a previous TXOP. In FIG. 4, a STA #1 obtains a previous TXOP (for example, a TXOP #1 shown in FIG. 4). After an A-MPDU 1 and a BA 1 frame are exchanged, the current TXOP ends after a period of time (for example, an xIFS start moment shown in FIG. 4). In this case, a STA #3 and a STA #4 have experienced several consecutive contention failures, and meet a basic condition for sending a Defer Signal. The STA #3 and the STA #4 send Defer Signals after the channel is idle for xIFS. After receiving the Defer Signals, the STA #1 and a STA #2 consider the Defer Signals as incorrect receive frames, and then wait for EIFS time before channel contention after receiving the Defer Signals.

To enable the STA #1 and the STA #2 to consider the Defer Signals as the incorrect receive frames, a physical layer frame header (namely, an L-STF, an L-LTF, and an L-SIG) is used as the Defer Signal. In this way, because the STA #1 and the STA #2 cannot parse out originally unsent payload parts, the STA#1 and the STA#2 consider the Defer Signals as the incorrect frames. Because a plurality of stations may send Defer Signals at the same time, the STA #3 and the STA #4 cannot immediately perform sending after sending the Defer Signals, but need to further perform a backoff procedure (for example, a backoff #1 and a backoff #2 shown in FIG. 4), to avoid a collision between the STA #3 and the STA #4.

The Defer Signal sending procedure shown in FIG. 4 has the following problems:

(1) Carrier frequency offsets CFOs for stations are different. When the plurality of stations send the Defer Signals at the same time, a third-party station may fail to receive the Defer Signals due to an excessively large CFO deviation. For example, as shown in FIG. 4, if a CFO deviation between the STA #3 and the STA #4 is excessively large, the Defer Signals sent by the STA #3 and the STA #4 may fail to be received by the STA #1 and the STA #2.

(2) Channel idle moments determined by different stations may be different. Therefore, sending moments of Defer Signals cannot be aligned. For example, as shown in FIG. 4, it is assumed that before sending the Defer Signals, the STA #3 and the STA #4 need to determine that the channel is idle. If channel idle moments determined by the STA #3 and the STA #4 are different, the Defer Signals sent by the STA #3 and the STA #4 may fail to be received by the STA #1 and the STA #2.

(3) When the L-STF, the L-LTF, and the L-SIG are used as Defer Signals, behaviors of conventional STAs after the conventional STAs receive the Defer Signals may be inconsistent. Some stations may not consider the Defer Signal as a PPDU that is being received because no energy is received after the Defer Signal, and then immediately initiate channel contention. For example, as shown in FIG. 4, after receiving the Defer Signals, the STA #1 and the STA #2 do not wait for the EIFS time before channel contention, but directly initiate channel contention.

To resolve the problems in the Defer Signal sending procedure shown in FIG. 4, this application provides a communication method, to reduce a delay by avoiding a CFO deviation between different stations.

The following describes the technical solutions provided in this application in detail with reference to the accompanying drawings. Embodiments of this application may be applied to a plurality of different scenarios, including but not limited to the scenario shown in FIG. 1.

It should be understood that a specific structure of an entity for performing a method provided in embodiments of this application is not particularly limited in the following embodiments, provided that the entity can run a program that records code of the method provided in embodiments of this application to perform communication according to the method provided in embodiments of this application. For example, the entity for performing the method provided in embodiments of this application may be a receive end device or a transmit end device, or a functional module that is in a receive end device or a transmit end device and that can invoke the program and execute the program.

The following describes in detail the communication method provided in embodiments of this application by using interaction between a first station and a second station as an example without loss of generality. In embodiments of this application, the first station may be an access point AP, and the second station may be a non-access point non-AP (for example, a STA); or the first station may be an access point STA, and the second station may be a non-access point AP; or the first station and the second station are access points APs; or the first station and the second station are non-access points non-APs.

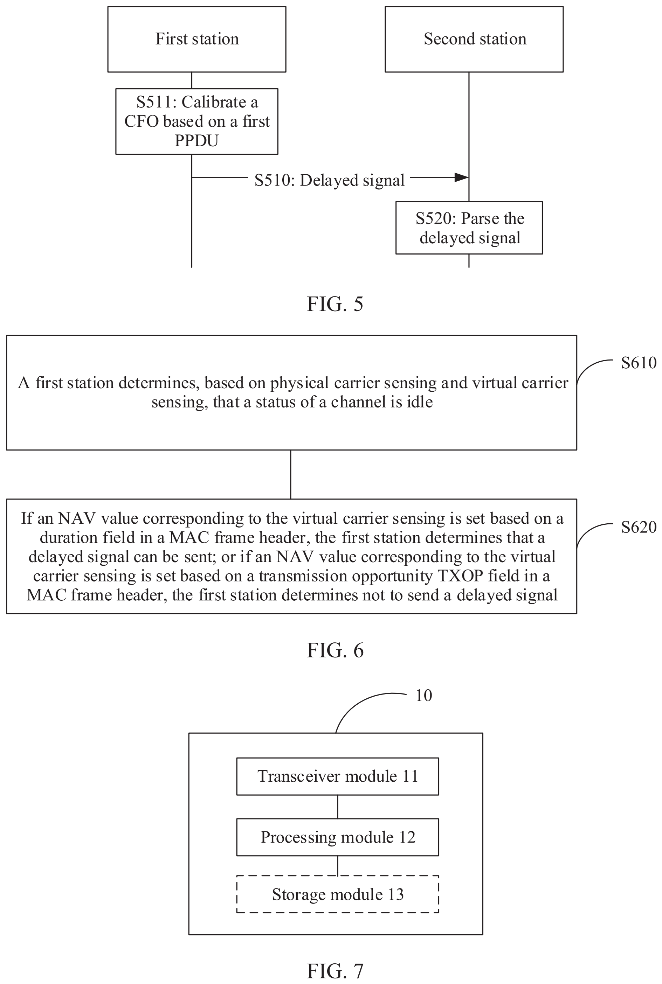

FIG. 5 is a schematic flowchart of a communication method according to an embodiment of this application. The method includes the following steps.

S510: The first station sends a defer signal.

The first station may be any station that needs to perform channel contention. For example, a WLAN operates on an unlicensed spectrum, and a plurality of stations need to share a same channel. The first station is one of the plurality of stations that need to share the same channel for transmission.

In a possible implementation, the first station may be a station that fails to send a radio frame on the channel for k consecutive times, and k is a positive integer. When k is equal to 1, that the first station fails to send the radio frame on the channel for the k consecutive times means that the first station fails to send the radio frame on the channel once. A form of the radio frame transmitted on the channel is not limited in embodiments, and may be a data frame, a control frame, a management frame, or the like.

In another possible implementation, the first station may be any station that needs to send a defer signal.

It should be understood that a condition for the first station to send the defer signal is not limited in embodiments. The station may be a station that fails to perform channel contention, or may be a station with a high priority, or may be a station with another feature. Details are not described in embodiments.

Specifically, the defer signal is used to trigger another station to wait for a second duration before channel contention. For example, the another station in embodiments may be a station that can receive the defer signal sent by the first station. It should be noted that, in embodiments, an objective of sending the defer signal by the first station is to enable the another station to wait for a period of time before channel contention, to increase a probability that the first station successfully performs channel contention. A function of the defer signal may be understood as triggering the another station that may receive the defer signal to wait for a period of time before channel contention.

For example, for the function of the defer signal, refer to the foregoing function descriptions of the Defer Signal. No limitation is imposed on a specific function of the defer signal in embodiments.

In a possible implementation, the defer signal in this embodiment is the foregoing Defer Signal.

In another possible implementation, the defer signal is another signal that can implement the function of the Defer Signal.

In this implementation, the defer signal may be a signal generated based on a MAC frame. For example, the defer signal may use a current CTS or ACK format design.

Specifically, if the defer signal is generated based on the MAC frame, values of a scrambler seed, an L-SIG, a Duration field, and an RA field included in the MAC frame are determined. That content included in the MAC frame is determined may be understood as that the MAC frame is predefined in a protocol or determined through negotiation between stations. The content in the MAC frame does not change with different stations. In other words, defer signals generated by different stations are the same.

In this implementation, because the defer signal is generated based on the MAC frame, and the content in the MAC frame is determined, all stations that receive the defer signal can respond to the defer signal in a unified manner, and to wait for a period of time before channel contention.

Optionally, the scrambler seed may be a fixed scrambler seed predefined in an existing standard or a future standard.

Optionally, the L-SIG includes a RATE field, a Reserved field, a LENGTH field, a Parity field, and a SIGNAL TAIL field. The Reserved field and the SIGNAL TAIL field are set to 0, and the Parity field is a check bit generated based on a field before the Parity field. As long as the RATA field and the LENGTH field are determined, the Parity field is also determined.

A rate needs to be fixed for the RATA field. For example, the RATA field is 1101, indicating a lowest rate of 6 Mbps, or the RATA field is fixed to another value, indicating another rate. In addition, because the MAC frame is a frame with a fixed length, no special agreement is required for the LENGTH field.

Optionally, the Duration field is used to protect a period of time after the defer signal, so that a plurality of stations that send the defer signal can perform backoff. Because there are not many stations that send the defer signal at the same time, a backoff window size may be selected as 7 or 3. In this way, the Duration field may be set to (7+1)*9 microseconds=72 microseconds, or (3+1) *9 microseconds=36 microseconds. 9 microseconds is a length of one slot (TimeSlot).

Optionally, the RA field indicates a broadcast address or a determined MAC address.

It should be understood that the foregoing is merely an example for description. A possible form of the defer signal in this embodiment does not constitute any limitation on the protection scope of this application. A specific form of the defer signal in this embodiment is not limited. For example, when the defer signal is generated based on the MAC frame, the content in the MAC frame may further be other determined content other than the foregoing content.

For example, the first station may send the defer signal after the channel is idle for a first duration (for example, DIFS). For example, the first station determines, by invoking a carrier sensing mechanism, that a status of the channel is idle, and sends the defer signal after the channel is idle for DIFS. In this case, the method procedure shown in FIG. 5 further includes the following steps.

Specifically, how the first station determines that the channel is idle is not limited in this embodiment. The first station may determine that the channel is idle by using the carrier sensing mechanism. For a process of determining that the channel is idle by using the carrier sensing mechanism, refer to descriptions of determining, by a station based on a carrier sensing mechanism, that a channel is idle or busy in a related technology, or refer to a carrier sensing process shown in FIG. 6 below. Details are not described herein.

In this embodiment, no limitation is imposed on specific stations that can receive the defer signal. When sending the defer signal, the first station may send the defer signal in a broadcast, multicast, or unicast manner. The first station may not be aware of the specific stations that can receive the defer signal. For ease of description, in this embodiment, an example in which the first station sends the defer signal to the second station is used for description. The second station is any one of at least one station that can receive the defer signal.

It can be learned from the Defer Signal sending procedure shown in FIG. 4 that a plurality of stations send Defer Signals without being scheduled by one trigger frame. In this case, if the plurality of stations send the Defer Signals without adjusting CFOs, a CFO deviation is excessively large. According to a standard protocol requirement, a transmit center frequency deviation of a station between a 5 GHz frequency band and a 6 GHz frequency band may reach ±20 ppm. Through calculation on the 5 GHz frequency band, the CFO can reach ±100 kHz, that is, the maximum absolute deviation can reach 200 kHz. The maximum absolute deviation is far greater than half of a subcarrier spacing 312.5 kHz. In this case, another station cannot correctly receive Defer Signals simultaneously sent by more than two stations. Therefore, a station that sends a Defer Signal may not be able to trigger, by using the Defer Signal, the another station to wait for a period of time before channel contention.

In this embodiment, to avoid the problem, shown in FIG. 4, that the CFO deviation is excessively large when the plurality of stations send the Defer Signals without adjusting the CFOs, the first station calibrates a CFO before sending the defer signal. Therefore, the first station needs to calibrate the CFO before sending the defer signal. To be specific, before step S510, the method procedure shown in FIG. 5 further includes the following steps.

S511: The first station calibrates the CFO based on a first PPDU.

The first PPDU is a last PPDU received before the defer signal is sent.

For example, in this embodiment, that the first station calibrates the CFO based on the first PPDU may be understood as that the first station calibrates the CFO based on known information in a received signal, for example, an OFDM symbol, that carries the first PPDU. For example, the first station may calibrate the CFO based on the signal, for example, the OFDM symbol, that carries a short training field (Short Training Field, STF) and/or a long training field (Long Training Field, LTF) field in a physical (Physical, PHY) frame header of the first PPDU. In addition, a pilot (pilot) in a data part of the first PPDU may also be used for phase tracking, and may also assist in CFO calibration.

For example, that the first station calibrates the CFO of the first station based on the first PPDU may be that the first station aligns the CFO of the first station with a CFO of a station sending the first PPDU.

For example, the first PPDU is a PPDU sent by a station #2 to the first station, and a CFO of the station #2 when sending the first PPDU is a CFO #1. After receiving the first PPDU, the first station may determine, based on the first PPDU, that the CFO of the station #2 is the CFO #1, and align the CFO of the first station with the CFO #1.

It should be noted that how to determine the last received PPDU is not limited in this implementation. For example, the first station may calibrate the CFO of the first station based on each received PPDU. In this way, before sending the defer signal, the first station has calibrated the CFO of the first station based on the last received PPDU. Alternatively, in this embodiment, the first station estimates a moment of sending the defer signal before sending the defer signal. Therefore, in a period of time before the moment of sending the defer signal, the first station calibrates the CFO of the first station based on one or more received PPDUs. The CFO may not be calibrated before the period of time.

For example, the first station estimates to send the defer signal at a moment #1, and receives a PPDU #1, a PPDU #2, and a PPDU #3 in sequence before the moment #1. In this case, the PPDU #3 is the first PPDU.

For example, that the first station calibrates the CFO based on the first PPDU includes: The first station calibrates the CFO based on each of the at least one PPDU, and the first PPDU is a last received PPDU in the at least one PPDU.

For example, the first station estimates to send the defer signal at the moment #1, and receives the PPDU #1, the PPDU #2, and the PPDU #3 in sequence before the moment #1. In this case, the first station may calibrate the CFO based on the PPDU #1, the PPDU #2, and the PPDU #3 respectively.

In this embodiment, that the first station calibrates the CFO based on the first PPDU may be that the first station calibrates the CFO once each time the first station receives a PPDU before sending the defer signal; or the first station may determine, based on an estimated moment of sending the defer signal, a PPDU as a last PPDU received before sending the defer signal, and calibrate the CFO based on the PPDU.

In a possible implementation, in this embodiment, the first station may immediately calibrate the CFO after receiving the first PPDU. For example, the first station may calibrate the CFO based on the first PPDU when receiving the first PPDU is completed. For ease of understanding, in this embodiment, the first station immediately calibrates the CFO after receiving the first PPDU. Because the first PPDU has a specific transmission duration, a specific calibration moment may be a moment at which the physical layer preamble (PHY Preamble) of the first PPDU is received or a moment at which the entire first PPDU is received. This is not limited in this application.

In another possible implementation, in this embodiment, the first station may calibrate the CFO after a period of time after receiving the first PPDU and before sending the defer signal. For example, the first station may record the first PPDU locally after receiving the first PPDU, and then calibrate the CFO based on the first PPDU when necessary. In a scenario in which a plurality of stations in a communication system all send defer signals, there is a high probability that last PPDUs received by the plurality of stations in the system are the same PPDU. Therefore, if the plurality of stations perform CFO calibration based on the last PPDU received before sending the defer signals, it can be ensured to some extent that values of CFOs of the plurality of stations sending the defer signals are similar. Therefore, the defer signals sent by the plurality of stations can be normally received by another station even if a CFO deviation is excessively large. This ensures normal transmission of the defer signals. In this way, the first station can trigger, by sending the defer signals, the another station to wait for a period of time before channel contention, thereby reducing a delay of the first station.

In a possible implementation, in the scenario in which the plurality of stations in the communication system all send the defer signals, some of the plurality of stations may incorrectly parse a receive frame due to interference or a difference between received signal to interference plus noise ratios of the plurality of stations that send the defer signals. For example, a station #1 in the plurality of stations cannot parse a last received PPDU due to an interference problem, and therefore cannot calibrate a CFO based on the last received PPDU. If the station #1 cannot calibrate the CFO based on the last received PPDU, the CFO of the station #1 may have a large CFO deviation from that of another station in the plurality of stations.

If the station #1 still sends a defer signal, defer signal transmission may fail in another station in the plurality of stations due to the large CFO deviation. In this case, the station #1 is not allowed to send the defer signal.

In this implementation, to avoid a defer signal transmission failure caused by a failure of parsing a last received PPDU by a station, the first PPDU in this embodiment is a PPDU that can be correctly parsed. The first PPDU is a successfully parsed PPDU, indicating that the first station obtains a payload part of the first PPDU, and a frame check sequence (frame check sequence, FCS) of the payload part of the first PPDU is successfully checked.

In another possible implementation, after the first station calibrates the CFO, the CFO gradually increases with time. Therefore, in the scenario in which the plurality of stations in the communication system all send the defer signals, even if the plurality of stations calibrate CFOs based on a same PPDU, a time between calibrating the CFO and sending the defer signal cannot be excessively long.

In this implementation, duration between a moment at which the CFO is calibrated and a moment at which the defer signal is sent may be limited to be less than or equal to a first threshold, to avoid an excessively long time between calibrating the CFO and sending the defer signal. In other words, after the first threshold is exceeded, the station is not allowed to send the defer signal. A value of the first threshold may be determined based on frequency stability of a crystal oscillator used by the station, or the first threshold is a value negotiated between stations, or the first threshold is a predefined value. A value of the first threshold is not limited in this embodiment.

In another possible implementation, because physical locations are different, frames that can be received by different stations may be different. As shown in FIG. 4, it is assumed that the STA #3 can receive the A-MPDU 1 but cannot receive the BA 1, so that the STA #3 calibrates the CFO based on a PPDU carried in the A-MPDU 1; and it is assumed that the STA#4 can receive the BA 1 but cannot receive the A-MPDU 1, so that the STA #4 calibrates the CFO based on the BA 1. In other words, even if a station is required to calibrate a CFO based on a last received PPDU, the last received PPDU may be different for different stations.

In this implementation, the frame carried in the first PPDU may be limited to a response frame or a frame that does not trigger a response frame. By stipulating that a frame used by a station to calibrate a CFO is a response frame or a frame that does not trigger a response frame, in the scenario in which the plurality of stations in the communication system all send the defer signals, it can be avoided that different stations calibrate CFOs based on different PPDUs. The response frame includes but is not limited to a response frame (for example, an ACK frame or a block acknowledgement (block acknowledgement, BA) frame) in response to a frame sent by the first station or another station. The frame that does not trigger a response frame includes but is not limited to a frame sent by another station and received by the first station. The frame is a frame that does not need to be responded to (for example, a broadcast frame or another frame that does not need to be responded to).

S520: The second station parses the defer signal.

Specifically, after receiving the defer signal, the second station may trigger, based on the defer signal, to wait for a second duration before channel contention. For example, the second duration may be the foregoing EIFS.

It should be understood that the second duration waited by the second station is related to the defer signal. For example, it is assumed that the defer signal includes a physical layer frame header (for example, an L-STF, an L-LTF, and an L-SIG). After receiving the defer signal, the second station considers that the defer signal is a WLAN receive frame. However, because the second station cannot parse out a correct payload (payload) part (for example, the defer signal may not have the payload part), the second station may process the defer signal as a WLAN frame that is incorrectly received. A current protocol stipulates that after a station receives a WLAN frame but parses the frame incorrectly, the station needs to wait for an EIFS to avoid a conflict with a possible response frame of the frame. EIFS duration is: EIFS=aSIFSTime+AckTxTime+DIFS, where aSIFSTime is an interframe space SIFS after an error frame, AckTxTime is sending time of an acknowledgement frame for the error frame, and DIFS is time that needs to be waited for the channel to be continuously idle before channel contention is performed again.

In the embodiment shown in FIG. 5, before sending the defer signal, the first station may calibrate the CFO based on the last received first PPDU. The defer signal is used to trigger the another station to wait for the second duration before channel contention. This increases a probability that the first station successfully performs channel contention, to reduce a delay of the first station. In addition, in the technical solution, before sending the defer signal, the first station calibrates the CFO of the first station based on the last received first PPDU, so that in the scenario in which the plurality of stations in the communication system all send the defer signals, the defer signals sent by the plurality of stations can be normally received by another station even if CFO deviation is excessively large. This ensures normal transmission of the defer signals, to reduce the delay of the first station.

This application further provides a communication method, so that moments at which a plurality of stations send defer signals are basically aligned. The following describes the communication method in detail with reference to FIG. 6.

FIG. 6 is a schematic flowchart of a communication method according to an embodiment of this application. The method includes the following steps.

S610: A first station determines, based on physical carrier sensing and virtual carrier sensing, that a status of a channel is idle.

In this embodiment, the first station may determine, based on the physical carrier sensing and the virtual carrier sensing, that the status of the channel is idle. Specifically, when both the physical carrier sensing and the virtual carrier sensing are idle, a station determines that the channel is idle.

The physical carrier sense is directly sensing a received signal or energy magnitude on a current channel.

For the virtual carrier sensing, after receiving a frame whose receiver address is neither a broadcast address nor a MAC address of the first station, an NAV timer is set, and then countdown is performed until the countdown is 0. If the NAV value is not 0, the virtual carrier sensing is busy. If the NAV value is 0, the virtual carrier sensing is idle.

If a plurality of stations determine, based on the physical carrier sensing, that the channel is busy or idle, the plurality of stations determine that the channel is busy or idle almost at the same time. For example, a communication distance of a plurality of stations is within a range of tens of meters, and impact caused by a propagation delay within the range of tens of meters is small. For example, a distance difference of 30 meters causes only a difference of 0.1 microseconds, and is within a range of an OFDM symbol guard interval (for example, the OFDM symbol guard interval is 0.4 microseconds or 0.8 microseconds).

AN NAV value corresponding to the virtual carrier sensing may be set based on a Duration field in a MAC frame header, or may be set based on a transmission opportunity TXOP subfield in a physical layer frame header.

Optionally, when the NAV value corresponding to the virtual carrier sensing is set based on the Duration field, a granularity of the NAV is 1 microsecond. If the NAV value corresponding to the virtual carrier sensing is set based on the TXOP subfield, the granularity of the NAV is 8 microseconds or 128 microseconds. If the NAVs are set based on different fields by the plurality of stations, a maximum error of determining a channel idle moment is far greater than the OFDM symbol guard interval. Therefore, the plurality of stations that need to send defer signals or Defer Signals cannot perform sending at a same moment. Consequently, another station cannot correctly receive the plurality of defer signals or Defer Signals sent by the plurality of stations.

In this embodiment, to avoid, in the scenario in which the plurality of stations in the communication system all send the defer signals, an excessively large difference between moments at which different stations determine, by using the carrier sensing mechanism, that the status of the channel is idle, if the NAV based on which the first station performs virtual carrier sensing is set based on the duration Duration field in the MAC frame header, the first station may send the defer signal after the channel is idle for a duration. If the NAV based on which the first station performs virtual carrier sensing is set based on the TXOP field in the MAC frame header, the first station determines that the defer signal cannot be sent. In this case, the method procedure shown in FIG. 6 further includes the following steps.

S620: If the NAV value corresponding to the virtual carrier sensing is set based on the duration field in the MAC frame header, the first station determines that the defer signal can be sent; or if the NAV value corresponding to the virtual carrier sensing is set based on the transmission opportunity TXOP field in the MAC frame header, the first station determines not to send the defer signal.

It should be noted that even if the NAV value is set based on the Duration field in the MAC frame header, NAV values set by different stations may also have a deviation. A granularity of the Duration field is 1 microsecond, and a length of a frame is not always an integer multiple of a microsecond, and therefore, the NAV values set by the different stations may have a deviation of a few tenths of a microsecond. Further, if the deviation less than 1 microsecond is accumulated for a plurality of times, an obtained value may exceed 1 microsecond. For example, two stations that set the NAVs based on the Duration field may have a microsecond or sub-microsecond time difference if the NAVs are set based on different frames (due to a hidden node problem or due to a station missing some frames for power saving). When the time difference is greater than the OFDM symbol guard interval, a third-party station may fail to correctly receive the defer signal.

This embodiment provides a manner of determining a start moment of sending the defer signal, so that even if there is a microsecond or sub-microsecond deviation between channel idle moments determined by different stations, a deviation between start moments of sending defer signals by different stations can be further reduced. Specifically, a time synchronization function TSF value of a start moment of sending defer signals by different stations is an integer multiple of 9 microseconds. That is, the start moment of sending the defer signal is aligned with a time point at which the TSF value is an integer multiple of 9 microseconds, so that sending time of defer signals by different stations is aligned. Specifically, one of upward alignment, downward alignment, or nearest alignment may be used to align the start moment of sending the defer signal with the time point at which the TSF value is an integer multiple of 9 microseconds.

In the communication method shown in FIG. 6, if the NAV based on which the first station performs virtual carrier sensing is set based on the duration Duration field in the MAC frame header, the first station may send the defer signal after the channel is idle for a duration. If the NAV based on which the first station performs virtual carrier sensing is set based on the TXOP field in the MAC frame header, the first station determines that the defer signal cannot be sent. This is to avoid, in a scenario in which a plurality of stations in a communication system all send defer signals, an excessively large difference between moments at which different stations determine, by using the carrier sensing mechanism, that the status of the channel is idle.

In addition, it should be noted that the communication method shown in FIG. 6 may be used in combination with the communication method shown in FIG. 5. For example, in the communication method shown in FIG. 5, before sending the defer signal, the first station may determine a channel idle moment and determine a moment of sending the defer signal based on the communication method shown in FIG. 6. Alternatively, the communication method shown in FIG. 6 may be applied to any scenario in which a channel idle moment and/or a moment of sending a defer signal need to be determined in an existing or future communication technology. This is not limited in this application.

This application further provides a defer signal design method. The method may be applied to the communication method shown in FIG. 5, or the method may be applied to any scenario in which the defer signal needs to be designed in the existing or future technology. For example, the defer signal sent by the first station in the communication method shown in FIG. 5 is determined based on the defer signal design method.

Specifically, the defer signal design method includes: generating a defer signal based on a MAC frame. Values of a scrambler seed, an L-SIG, a Duration field, and an RA field included in the MAC frame are determined. That content included in the MAC frame is determined may be understood as that the MAC frame is predefined in a protocol or determined through negotiation between stations. The content in the MAC frame does not change with different stations. In other words, defer signals generated by different stations are the same.

In this implementation, because the defer signal is generated based on the MAC frame, and the content in the MAC frame is determined, all stations that receive the defer signal can respond to the defer signal in a unified manner, and to wait for a period of time before channel contention.

Optionally, the scrambler seed may be a fixed scrambler seed predefined in an existing standard or a future standard.

Optionally, the L-SIG includes a RATE field, a Reserved field, a LENGTH field, a Parity field, and a SIGNAL TAIL field. The Reserved field and the SIGNAL TAIL field are set to 0, and the Parity field is a check bit generated based on a field before the Parity field. As long as the RATA field and the LENGTH field are determined, the Parity field is also determined.

A rate needs to be fixed for the RATA field. For example, the RATA field is 1101, indicating a lowest rate of 6 Mbps, or the RATA field is fixed to another value, indicating another rate. In addition, because the MAC frame is a frame with a fixed length, no special agreement is required for the LENGTH field.

Optionally, the Duration field is used to protect a period of time after the defer signal, so that a plurality of stations that send the defer signal can perform backoff. Because there are not many stations that send the defer signal at the same time, a backoff window size may be selected as 7 or 3. In this way, the Duration field may be set to (7+1)*9 microseconds=72 microseconds, or (3+1) *9 microseconds=36 microseconds. 9 microseconds is a length of one slot (TimeSlot).

Optionally, the RA field indicates a broadcast address or a determined MAC address.

The defer signal involved in the defer signal design method can enable all stations that receive the defer signal to respond to the defer signal in a unified manner.

It should be understood that sequence numbers in the foregoing processes do not mean execution sequences. The execution sequence of the processes should be determined based on functions and internal logic of the processes, and should not constitute any limitation on implementation processes of embodiments of this application.

It should be further understood that, in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be further understood that, in some of the foregoing embodiments, a device in an existing network architecture is mainly used as an example for description. It should be understood that, a specific form of the device is not limited in embodiments of this application. For example, all devices that can implement a same function in the future are applicable to embodiments of this application.

It may be understood that, in the foregoing method embodiments, methods and operations implemented by a device (for example, a first station) may alternatively be implemented by a component (for example, a chip or a circuit) that can be used in the device.

It may be further understood that some optional features in embodiments of this application may be independent of other features in some scenarios, or may be combined with other features in some scenarios. This is not limited.

The communication methods provided in embodiments of this application are described above in detail with reference to FIG. 5 and FIG. 6. The foregoing communication methods are mainly described from a perspective of the first station. It may be understood that, to implement the foregoing functions, the first station includes a corresponding hardware structure and/or software module for performing each of the functions.

A person skilled in the art should be able to be aware that, in combination with the examples described in embodiments disclosed in this specification, units and algorithm steps can be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

The communication apparatus provided in embodiments of this application is described in detail with reference to FIG. 7 to FIG. 9. It should be understood that descriptions of apparatus embodiments correspond to the descriptions of the method embodiments. Therefore, for content that is not described in detail, refer to the foregoing method embodiments. For brevity, some content is not described again.

In embodiments of this application, functional modules of a transmit end device or a receive end device may be divided based on the foregoing method examples. For example, functional modules may be divided based on functions, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. An example in which each functional module is obtained through division based on each corresponding function is used below for description.

FIG. 7 is a block diagram of a communication apparatus 10 according to an embodiment of this application. The apparatus 10 includes a transceiver module 11 and a processing module 12. The transceiver module 11 may implement a corresponding communication function, and the processing module 12 is configured to perform data processing; or the transceiver module 11 is configured to perform receiving and sending related operations, and the processing module 12 is configured to perform operations other than receiving and sending. The transceiver module 11 may also be referred to as a communication interface or a communication unit.

Optionally, the apparatus 10 may further include a storage module 13. The storage module 13 may be configured to store instructions and/or data. The processing module 12 may read the instructions and/or the data in the storage module, to cause the apparatus to implement actions of a device in the foregoing method embodiments.

In a design, the apparatus 10 may correspond to the first station in the foregoing method embodiments, or may be a component (for example, a chip) of the first station.

The apparatus 10 may implement corresponding steps or procedures performed by the first station in the foregoing method embodiments. The transceiver module 11 may be configured to perform receiving and sending related operations of the first station in the foregoing method embodiments, and the processing module 12 may be configured to perform a processing related operation of the first station in the foregoing method embodiments.

In a possible implementation, the processing module 12 is configured to generate a defer signal, where the defer signal is used to trigger another station to wait for a second duration before channel contention; and the transceiver module 11 is configured to send the defer signal after a channel is idle for a first duration. Before the transceiver module 11 sends the defer signal, the processing module 12 is configured to calibrate a carrier frequency offset CFO based on a first PPDU, where the first PPDU is a last PPDU received before the defer signal is sent.

In another possible implementation, the processing module 12 is configured to determine, based on physical carrier sensing and virtual carrier sensing, that a status of a channel is idle; and if a network allocation vector NAV value corresponding to the virtual carrier sensing is set based on a duration Duration field in a medium access control MAC frame header, the processing module 12 is configured to send a defer signal after determining that the channel is idle for a first duration; or if an NAV value corresponding to the virtual carrier sensing is set based on a transmission opportunity TXOP field in a MAC frame header, the processing module 12 is configured to determine not to send a defer signal, where the defer signal is used to trigger another station to wait for a second duration before channel contention.

In another possible implementation, the processing module 12 is configured to generate a defer signal based on a medium access control MAC frame, where the defer signal is used to trigger another station to wait for a second duration before channel contention, and values of a scrambler seed, a legacy signal field L-SIG, a duration Duration field, and a receiver address RA field in the MAC frame are determined; and the transceiver module 11 is configured to send the defer signal after a channel is idle for a first duration.

When the apparatus 10 is configured to perform the method in FIG. 5, the transceiver module 11 may be configured to perform steps of receiving and sending information in the method, for example, step S510; and the processing module 12 may be configured to perform a processing step in the method, for example, step S511.

When the apparatus 10 is configured to perform the method in FIG. 6, the transceiver module 11 may be configured to perform steps of receiving and sending information in the method, and the processing module 12 may be configured to perform a processing step in the method, for example, steps S610 and S620.

It should be understood that a specific process in which the units perform the foregoing corresponding steps is described in detail in the foregoing method embodiments. For brevity, details are not described herein again.

It should be further understood that the apparatus 10 herein is embodied in a form of a functional module. The term "module" herein may be an application-specific integrated circuit (application-specific integrated circuit, ASIC), an electronic circuit, a processor (for example, a shared processor, a dedicated processor, or a group processor) configured to execute one or more software or firmware programs, a memory, a combinational logic circuit, and/or another suitable component that supports the described functions. In an optional example, a person skilled in the art may understand that the apparatus 10 may be specifically a mobility management network element in the foregoing embodiments, and may be configured to perform procedures and/or steps corresponding to the mobility management network element in the foregoing method embodiments. Alternatively, the apparatus 10 may be specifically the terminal device in the foregoing embodiments, and may be configured to perform procedures and/or steps corresponding to the terminal device in the foregoing method embodiments. To avoid repetition, details are not described herein again.

The apparatus 10 in each of the foregoing solutions has a function of implementing corresponding steps performed by a device (for example, the first station) in the foregoing methods. The function may be implemented by hardware, or may be implemented by hardware executing corresponding software. The hardware or software includes one or more modules corresponding to the foregoing functions. For example, the transceiver module may be replaced with a transceiver (for example, a sending unit in the transceiver module may be replaced with a transmitter, and a receiving unit in the transceiver module may be replaced with a receiver), and another unit such as a processing module may be replaced with a processor, to separately perform a receiving and sending operation and a related processing operation in each method embodiment.

In addition, the transceiver module 11 may be a transceiver circuit (for example, may include a receiver circuit and a transmitter circuit), and the processing module may be a processing circuit.

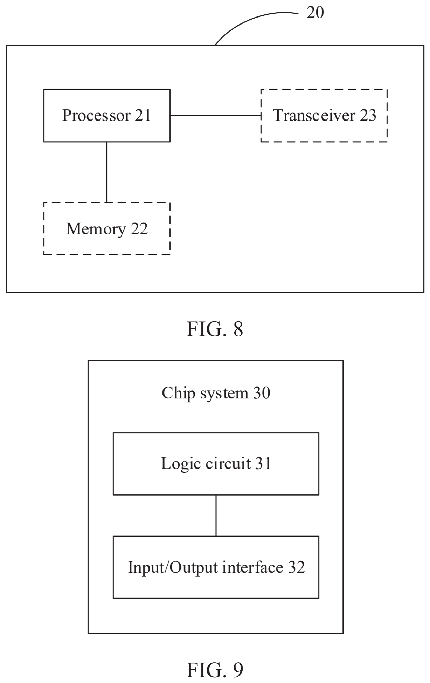

FIG. 8 is a diagram of another communication apparatus 20 according to an embodiment of this application. The apparatus 20 includes a processor 21. The processor 21 is configured to execute a computer program or instructions stored in a memory 22, or read data/signaling stored in the memory 22, to perform the methods in the foregoing method embodiments. Optionally, there are one or more processors 21.

Optionally, as shown in FIG. 8, the apparatus 20 further includes the memory 22, and the memory 22 is configured to store the computer program or the instructions and/or the data. The memory 22 and the processor 21 may be integrated together, or may be disposed separately. Optionally, there are one or more memories 22.

Optionally, as shown in FIG. 8, the apparatus 20 further includes a transceiver 23, and the transceiver 23 is configured to receive and/or send a signal. For example, the processor 21 is configured to control the transceiver 23 to receive and/or send a signal.

In a solution, the apparatus 20 is configured to implement operations performed by the first station in the foregoing method embodiments.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor, or the like.

It should be further understood that the memory mentioned in embodiments of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, but not limitation, the RAM includes the following a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

It should further be noted that the memory described herein is intended to include, but is not limited to, these and any other appropriate type of memory.

FIG. 9 is a diagram of a chip system 30 according to an embodiment of this application. The chip system 30 (or may be referred to as a processing system) includes a logic circuit 31 and an input/output interface (input/output interface) 32.

The logic circuit 31 may be a processing circuit in the chip system 30. The logic circuit 31 may be coupled to a storage unit, and invoke instructions in the storage unit, so that the chip system 30 can implement the methods and functions in embodiments of this application. The input/output interface 32 may be an input/output circuit in the chip system 30, and outputs information processed by the chip system 30, or inputs to-be-processed data or signaling information to the chip system 30 for processing.

In a solution, the chip system 30 is configured to implement operations performed by the first station in the foregoing method embodiments.

For example, the logic circuit 31 is configured to implement processing related operations performed by the first station in the foregoing method embodiments, and the input/output interface 32 is configured to implement sending and/or receiving related operations performed by the terminal device in the foregoing method embodiments.

An embodiment of this application further provides a computer-readable storage medium. The computer-readable storage medium stores computer instructions for implementing the method performed by a device in the foregoing method embodiments.

For example, when the computer program is executed by a computer, the computer is enabled to implement the methods performed by the first station in the foregoing method embodiments.

An embodiment of this application further provides a computer program product including instructions. When the instructions are executed by a computer, the methods performed by the first station in the foregoing method embodiments are implemented.

An embodiment of this application further provides a communication system, including the foregoing first station.

For explanations and beneficial effect of related content in any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or a part of the foregoing embodiments may be implemented by using software, hardware, firmware, or any combination thereof. When software is used to implement the foregoing embodiments, all or a part of the foregoing embodiments may be implemented in a form of a computer program product. The computer program product includes one or more computer instructions. When the computer program instructions are loaded and executed on a computer, procedures or functions according to embodiments of this application are all or partially generated. The computer may be a general-purpose computer, a dedicated computer, a computer network, or other programmable apparatuses. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:

   sending, by a first station, a defer signal after a channel is idle for a first duration, wherein the defer signal is used to trigger another station to wait for a second duration before channel contention; and
   calibrating, by the first station, a carrier frequency offset CFO based on a first physical layer protocol data unit PPDU before sending the defer signal, wherein the first PPDU is a last PPDU received before the defer signal is sent.

2. The method according to claim 1, wherein

   the first PPDU is a successfully parsed PPDU; and/or
   a duration between a moment at which the CFO is calibrated and a moment at which the defer signal is sent is less than or equal to a first threshold; and/or
   a frame carried in the first PPDU is a response frame or a frame that does not trigger a response frame.

3. The method according to claim 1 or 2, wherein before sending, by the first station, the defer signal, the method further comprises:
   determining, by the first station based on physical carrier sensing and virtual carrier sensing, that the channel is idle, wherein a network allocation vector NAV value corresponding to the virtual carrier sensing is set based on a duration Duration field in a medium access control MAC frame header.

4. The method according to any one of claims 1 to 3, wherein a time synchronization function TSF value at a start moment of sending the defer signal is an integer multiple of 9 microseconds.

5. The method according to any one of claims 1 to 4, wherein the defer signal is generated based on a medium access control MAC frame, and values of a scrambler seed, a legacy signal field L-SIG, a duration Duration field, and a receiver address RA field in the MAC frame are determined.

6. The method according to claim 6, wherein a rate RATA field in the L-SIG indicates 6 megabits per second (Mbps); and/or

   the Duration field indicates 72 microseconds or 36 microseconds; and/or
   the RA field indicates a broadcast address or a determined MAC address.

7. The method according to any one of claims 1 to 6, wherein the first station is a station that fails to send a radio frame on the channel for k consecutive times, and k is a positive integer.

8. A communication apparatus, comprising a transceiver unit and a processing unit, wherein the sending unit is configured to send the defer signal after a channel is idle for a first duration, wherein the defer signal is used to trigger another station to wait for a second duration before channel contention; and before the sending unit sends the defer signal, the processing unit is configured to calibrate a carrier frequency offset CFO based on a first physical layer protocol data unit PPDU, wherein the first PPDU is a last PPDU received before the defer signal is sent.

9. The apparatus according to claim 8, wherein before the sending unit sends the defer signal, the processing unit is further configured to determine, based on physical carrier sensing and virtual carrier sensing, that the channel is idle, wherein a network allocation vector NAV value corresponding to the virtual carrier sensing is set based on a duration Duration field in a medium access control MAC frame header.

10. A communication apparatus, comprising:
    a processor, configured to execute a computer program stored in a memory, to enable the apparatus to perform the method according to any one of claims 1 to 7.

11. The apparatus according to claim 10, wherein the apparatus further comprises the memory.

12. A computer-readable storage medium, wherein the computer-readable storage medium stores a computer program, and when the computer program is run on a computer, the computer is enabled to perform the method according to any one of claims 1 to 7.

13. A computer program product, wherein the computer program product comprises instructions used to perform the method according to any one of claims 1 to 7.

14. A communication system, comprising a first node, wherein the first node is configured to perform the method according to any one of claims 1 to 7.

FIG. 1

FIG. 2

EP 4 746 565 A1

PPDU

| Common field | User-specific field |
|---|---|

| L-STF (legacy short training field) | L-LTF (legacy long training field) | L-SIG (legacy signal field) | RL-SIG (repeated legacy signal field) | U-SIG (universal signal field) | EHT-SIG (EHT signal field) | EHT-STF (EHT-short training field) | EHT-LTF (EHT-long training field) | Data (data field) | PE (packet extension field) |
|---|---|---|---|---|---|---|---|---|---|

FIG. 3

FIG. 4

| First station | | Second station |
|---|---|---|

**S511: Calibrate a CFO based on a first PPDU**

S510: Delayed signal →

**S520: Parse the delayed signal**

## FIG. 5

A first station determines, based on physical carrier sensing and virtual carrier sensing, that a status of a channel is idle ⟨ S610

If an NAV value corresponding to the virtual carrier sensing is set based on a duration field in a MAC frame header, the first station determines that a delayed signal can be sent; or if an NAV value corresponding to the virtual carrier sensing is set based on a transmission opportunity TXOP field in a MAC frame header, the first station determines not to send a delayed signal ⟨ S620

## FIG. 6

⟨ 10

Transceiver module 11

Processing module 12

Storage module 13

## FIG. 7

20

Processor 21 ———— Transceiver 23

Processor 21 ———— Memory 22

FIG. 8

Chip system 30

Logic circuit 31

Input/Output interface 32

FIG. 9

## INTERNATIONAL SEARCH REPORT

| | International application No. |
|---|---|
| | **PCT/CN2024/110970** |

**A. CLASSIFICATION OF SUBJECT MATTER**

H04W74/00(2009.01)i; H04W74/08(2024.01)i; H04L27/00(2006.01)i

According to International Patent Classification (IPC) or to both national classification and IPC

**B. FIELDS SEARCHED**

Minimum documentation searched (classification system followed by classification symbols)

IPC: H04W, H04L

Documentation searched other than minimum documentation to the extent that such documents are included in the fields searched

Electronic data base consulted during the international search (name of data base and, where practicable, search terms used)

CNTXT, ENTXT, DWPI, VEN, ENTXTC, 3GPP: 信道, 空闲, 竞争, 延迟, 数据, 单元, 校准, 频偏, 偏移, 最后, 最近, 最新, channel, idle, contention, delay, data, unit, PPDU, Calibration, frequency, offset, last, recent, latest

**C. DOCUMENTS CONSIDERED TO BE RELEVANT**

| Category* | Citation of document, with indication, where appropriate, of the relevant passages | Relevant to claim No. |
|---|---|---|
| A | US 2016242177 A1 (NEWRACOM, INC.) 18 August 2016 (2016-08-18) description, paragraphs [0299]-[0396] | 1-14 |
| A | CN 106937403 A (HUAWEI TECHNOLOGIES CO., LTD.) 07 July 2017 (2017-07-07) entire document | 1-14 |
| A | CN 109714092 A (HUAWEI TECHNOLOGIES CO., LTD.) 03 May 2019 (2019-05-03) entire document | 1-14 |
| A | US 2016286012 A1 (NEWRACOM, INC.) 29 September 2016 (2016-09-29) entire document | 1-14 |

☐ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **15 October 2024** | **22 October 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/110970**

| Patent document cited in search report | | | Publication date (day/month/year) | Patent family member(s) | | | Publication date (day/month/year) |
|---|---|---|---|---|---|---|---|
| US | 2016242177 | A1 | 18 August 2016 | KR | 20160101687 | A | 25 August 2016 |
| | | | | US | 2018227913 | A1 | 09 August 2018 |
| CN | 106937403 | A | 07 July 2017 | WO | 2017114032 | A1 | 06 July 2017 |
| CN | 109714092 | A | 03 May 2019 | | None | | |
| US | 2016286012 | A1 | 29 September 2016 | US | 2018097917 | A1 | 05 April 2018 |

Form PCT/ISA/210 (patent family annex) (July 2022)

**REFERENCES CITED IN THE DESCRIPTION**

**Patent documents cited in the description**

- CN 202311039104